# EUROPEAN PATENT APPLICATION

(11) **EP 1 607 627 A1**
(43) Date of publication of application: **21.12.2005**
(21) Application number: 04076735.2
(22) Date of filing: 10.06.2004
(51) Int. Cl.: F03G 7/04

(54) **Contaminant abatement method and system for geothermal plant**

(71) Applicant: Nederlandse Organisatie voor Toegepast-Natuurwetenschappelijk Onderzoek TNO, 2628 VK Delft (NL)
(72) Inventor: Slenders, Hans, 6543 KB Nijmegen (NL); Geelen, Carolus Petrus Johannes Maria, 7326 ME Apeldoorn (NL); Sinke, Jacoba Corstina, 7314 JW Apeldoorn (NL)
(74) Representative: Winckels, Johannes Hubertus F.

(57) **Abstract**

The invention relates to a method for heating and/or cooling for instance a building or a fluid with geothermal energy, while groundwater is circulated between an underground location, hereinafter to be called: well, and an above ground location, on which above ground location heat is given off to or extracted from the groundwater. During circulation of the groundwater, decontaminants are added to this groundwater and/or the surrounding soil. As a result, simultaneously with given off or taking up the thermal energy, the groundwater and/or the surrounding soil can be decontaminated, at least be freed of contaminations.

## Description

The invention relates to a method for heating and/or cooling for instance a building or a fluid by means of geothermal energy. More in particular, the invention relates to a method in which groundwater is utilised for storing this geothermal energy and transferring it. To this end, this groundwater is circulated between one or several underground locations, hereinafter to be called: wells, and one above ground location, on which above ground location thermal energy, stored in the groundwater, is given off to the surroundings in the form of cold or heat in order to cool or heat, respectively, these surroundings such as, for instance, a building or a fluid flowing by.

Such a method is known. With it, the fact that the ground temperature at relatively great depth is more or less constant and is moreover, at least in most climates, higher than the above ground winter temperature and lower than the above ground summer temperature, is used in an advantageous manner. As a result, the soil can form a storage medium for thermal energy (cold or heat), with which the above ground surroundings can be heated during winter and be cooled during summer.

An advantage of this known method is that with it, the consumption of fossil fuels can be reduced and that when the method is used, no harmful flue gases such as carbon dioxide (CO₂), sulphur dioxide (SO₂) and/or nitrogen oxide (NOₓ) are produced. Moreover, the method can be carried out with robust means, which have low maintenance costs and a long lifespan.

However, a drawback of this known method is that the initial costs of investment are relatively high, in particular because of the construction of the necessary well or wells. In addition, this method is considered unsuitable to be used at locations with contaminated groundwater, because the risk of contaminations being spread through circulation of the groundwater and hence the problem being aggravated is considered (too) high. Moreover, contaminated water can pollute and damage the structure.

The object of the invention is to provide a method of the type described hereinabove, in which the drawbacks of the known method are at least partially eliminated while maintaining the advantages thereof. To that end, a method according to the invention is characterized by the features of claim 1.

By adding decontaminants to the groundwater and/or to the surrounding soil during circulation of this groundwater, with one set up, two objects can be realized simultaneously, i.e. utilising thermal energy in an advantageous manner and cleaning up contaminated soil. In this manner, a need can be made a virtue of and, by contrast, it becomes attractive to construct a geothermal structure according to the invention on contaminated locations, because as a result thereof, relatively high initial costs of investment can, in fact, be split in two.

In an advantageous embodiment, a method according to the invention is characterized by the features of claim 2. By adding nutrients, such as for instance nitrogen, phosphor and/or sulphate to the groundwater and/or the surrounding soil, the growth of certain bacteria can be stimulated, in particular those bacteria that can degrade contaminations present in the soil and/or the groundwater.

In addition thereto or as an alternative, the degradation process can be stimulated, for instance, by adding heat to contaminated groundwater and/or the surrounding soil (which is done, for instance, when the recirculated groundwater has been used above ground for the purpose of cooling). In this manner, around the wells, a biologically activated zone can be created in which contaminations can be degraded in an environmentally friendly manner.

This degradation process can proceed in an anaerobic or aerobic manner. For instance, by adding electron acceptors, such as for instance oxygen or nitrate, an aerobic, natural degradation process can be stimulated, according to the features of claim 3, with which for instance gasoline-like compounds, in particular aromatic petroleum hydrocarbons such as benzene, toluene, xylenes, ethylbenzene and/or alkanes can be degraded.

Alternatively, by adding an organic substrate such as, for instance, methanol or compost extract, an anaerobic degradation process can be stimulated, according to the features of claim 4. With it, in particular chlorine containing contaminations such as tetrachloroethylene (PER) or trichloroethene (TRI) can be degraded.

In a further advantageous embodiment, a method according to the invention is characterized by the features of claim 5. By utilizing at least two wells, in the one well, relatively hot water and in the other well relatively cold water can be stored. With such a setup, cooling and heating can take place in a simple manner, by reversing the direction of pumping. When there is a demand for cooling above ground, water is pumped up from the cold well. This water will take up heat from the surroundings and hence cool the surroundings. As a result, the water itself is heated. The thus heated water can be stored in the hot well. When, at some later time, heat is required, the pumping direction can be reversed, so that water can be pumped from the hot well to the cold well.

Alternatively, the pumping direction cannot be reversed which results in that the well from which groundwater is pumped up (also called extraction well) will maintain a constant temperature, while the well in which the groundwater is pumped back down (the infiltration well) will vary in temperature, depending on the above ground temperature. The fact is that, depending on this above ground temperature, the water pumped up from the extraction well will either have a heating function, thus giving off heat, or a cooling function, thus taking up heat. As a result, the temperature of this water will drop or rise, respectively, before it is pumped to the infiltration well.

Preferably, the distance between the wells is chosen such that the intermediately located soil can form an effective insulating buffer preventing the wells from influencing each other's temperatures. Further, through a correct choice of this distance, in combination with the dosage of the decontaminants, it can be effected that these decontaminants will be taken up virtually completely by the surrounding soil when the groundwater moves from well to well. As a result, obstruction of the wells with decontaminants and/or degradation products can be limited. Preferably, further, the wells are placed such that they cover the entire area to be decontaminated. To that end, among others, the number of wells, their respective depth and mutual location, and the flow rate pumped therethrough can be adapted to the type and the location of the contaminations.

It is noted, for that matter, that a method according to the invention can also be carried out with only one well, while groundwater is pumped from a part of the well located higher, and is pumped back to a point located deeper. However, it will be clear that in this case, the decontaminating effect will be limited to a relatively small area around the well.

In a further advantageous embodiment, the pumping direction between the wells can be reversed regularly, according to the features of claim 6. As a result, added decontaminants can mix well with the contaminations and the contaminations are prevented from spreading further, as they will keep moving between the wells. Hence, decontamination can proceed even more efficiently. Reversing the pumping direction can for instance be done periodically, but can also be done based on the above-ground demand for cooling (for instance in summer) or heating (for instance in winter).

In order to prevent the wells from becoming obstructed during use with bacteria and/or degradation products, it is preferred that the wells are cleaned regularly, for instance by flushing them with an acid or water under high pressure. Alternatively or in addition thereto, mechanical cleaning means can be used such as, for instance, a brush.

The invention further relates to a geothermal cooling and/or heating system according to the features of claim 9, suitable for use in a method according to the invention.

In the further subclaims, further advantageous embodiments of a method and system according to the invention are described. In clarification, embodiments of a system according to the invention and its operation will be further elucidated with reference to the drawing. In the drawing:
Fig. 1 schematically shows a first embodiment of a geothermal cooling and/or heating system with decontaminants according to the invention, used with a first type of soil contamination;
Figs. 2A, B schematically show an alternative exemplary embodiment of a system according to the invention, used with a different type of soil contamination, seen at two successive moments; and
Fig. 3 schematically shows a further exemplary embodiment of a system according to the invention wherein different soil decontamination techniques have been combined.

In this description, identical or corresponding parts have identical or corresponding reference numerals.

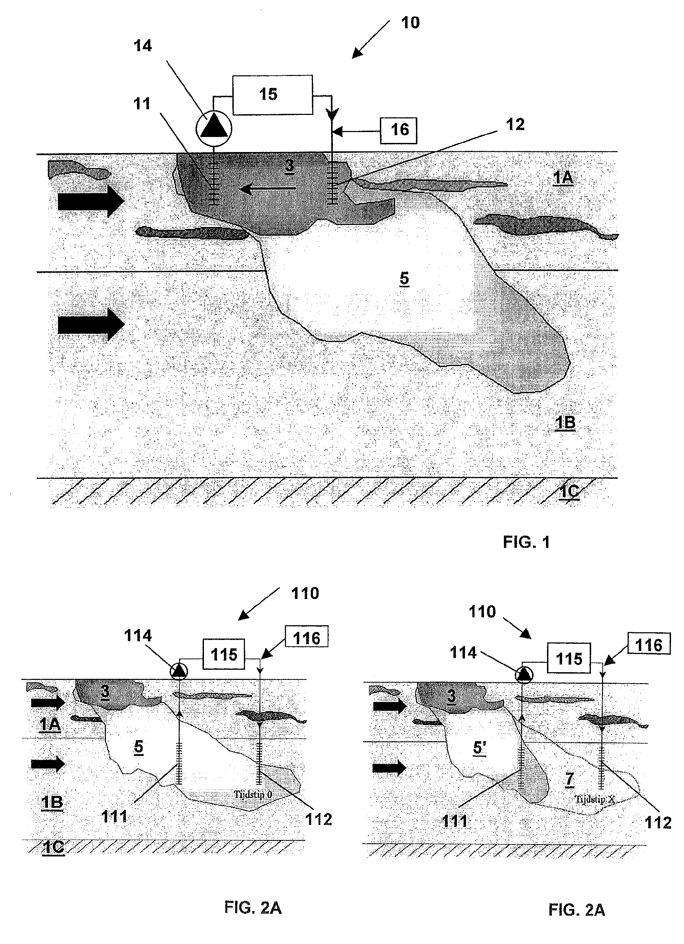

Figs. 1 - 3 all three show, in cross-section, a soil built up from three layers, i.e. a relatively shallow top layer 1A, located therebelow a second layer 1B, hereinafter to be called: water bearing section, and a third layer 1C located, in turn, below that, hereinafter to be called: mother material. The soil comprises two different, contaminated areas, i.e. a darkly hatched, first contaminated area 3, extending completely in the shallow top layer 1A, and a lighter hatched, second contaminated area 5, reaching away from the first area 3 into the water bearing section 1B located deeper down.

The first contaminated area 3 can for instance comprise high concentrations of pure, non-dissolved contaminations, such as gasoline or solvents, for instance PER (perchloroethylene or tetrachloroethylene) or TRI (trichloroethylene or trichloroethene). Such pure contaminations are generally (but not necessarily always) found more or less stationary in the soil, at a relatively limited depth, depending on the local geology. The second contaminated area 5 can be caused in that groundwater flows through the first area 3 (the source of contamination) and then becomes contaminated in that a part of the pure contaminations dissolves in this groundwater. Thereupon, the groundwater spreads in the adjoining water bearing section 1B and hence forms a second contaminated area 5 (also called the plume) wherein, as a rule, the contaminations will be present in smaller concentrations than in the source area 3, but will cover a greater area located deeper and, moreover, will be mobile, as they are taken along by the groundwater. As a result of the above-mentioned differences, the two contaminated areas 3, 5 require a different decontaminating technique to be described hereinafter, for instance as to depth of wells to be constructed, the mutual location of these wells, a pumping direction and/or or pump flow rate.

Further, each of these areas 3, 5 can be contaminated with different types of contaminations. In view of the present invention, these types can roughly be divided into two groups, i.e. chlorine containing contaminations, such as tetrachloroethylene or trichloroethene, and gasoline-like contaminations, in particular aromatic petroleum hydrocarbons, such as benzene, toluene, xylenes, ethylbenzenes or alkanes. This difference too requires a different approach of decontamination per type of contamination, in particular with regard to the decontaminants to be added to the groundwater during decontamination in order to stimulate degradation of the respective contaminations.

Information about, for instance, location, size and composition of these contaminated areas can be established per region or country in a geological database. Local variations (for instance in concentrations of the contaminations) can be measured in situ, for instance in the wells, to be discussed hereinafter.

Figs. 1 and 2 further show two possible embodiments of a cooling/heating system 10, 110 according to the invention for cooling or heating above ground buildings or fluids via geothermal energy (cold or heat) stored in the groundwater. Both systems 10, 110 comprise two wells 11, 12 or 111, 112, respectively, located at a distance from each other, in Fig. 1 reaching into the relatively shallow top layer 1A, in particular in the first contaminated area 3 (the source) and in Fig. 2 reaching, into the water bearing section 1B, in particular the second contaminated area 5 (the plume).

The systems 10; 110 further comprise pumping means 14, 114 and heat exchanging means 15; 115. The pumping means 14; 14 are arranged for pumping groundwater from the one well 11, 111 (the extraction well) upwards and, via the heat exchanging means 15, 115 arranged above ground, to the other well 12, 112 (the infiltration well). Preferably, the pumping device is then reversible, at least with the first system 10. To that end, as an alternative, the system 10; 110 can be equipped with two pumps (not shown), one for each pumping direction. The heat exchanging means 15; 115 are arranged for giving off thermal energy (cold or heat) carried along by the groundwater to the surroundings and can comprise, to that end, for instance a heat exchanger or a heat pump, provided with an evaporator and a condenser, or any other system known per se for exchanging heat

The main difference between the two systems 10; 110 is that with the system 10 shown in Fig. 1, the one well 11 functions as storage for cold water and the other well 12 for storing hot water. With this, depending on the pumping direction, the system 10 can operate as a heat supplier or a cold supplier. In the first case, groundwater is pumped upwards from the hot well 12. After the groundwater has given off heat above ground via the heat exchanging means 15 and hence will have dropped in temperature, this groundwater is infiltrated through the cold well 11. When reversing the pumping direction, this cold groundwater can be used for cooling the above ground surroundings, with the groundwater taking up heat via the heat exchanging means 15. The groundwater, being heated thus, can then be stored in the hot well 12. In this manner, a building connected to this system 10, in particular the heat exchanging means 15, can be heated or cooled.

With the second system 110 depicted in Fig. 2, no reversals of the pumping direction take place. During the year, the system 110 maintains the same pumping direction. As a result, the extraction well 111 from which the groundwater is pumped upwards has a substantially constant temperature. The infiltration well 112 however does change in temperature. This can be understood as follows. Depending on the above ground demand for heat or cold, pumped up groundwater will give off or, conversely, take up heat and its temperature will hence decrease, or increase, respectively. As a result, at the infiltration pump 112, together with the flow direction of the groundwater, temperature fluctuations occurs which will, however, dampen in the surrounding soil.

The above-described systems 10, 110 can be utilized in an advantageous manner for simultaneously decontaminating the groundwater they circulate and the surrounding soil. To that end, during circulation, a suitable decontaminant can be added to the groundwater, preferably just before the water is infiltrated into the soil. To that end, both systems 10,110 are equipped with dosing means 16, 116, respectively. With this, depending on the type of contamination (chlorine-containing or gasoline-like) a suitable substance can be added. In all cases, preferably, nutrients such as nitrogen, phosphor and/or sulphate are added in order to stimulate bacterial growth. In order to optimize the degradation of the gasoline-like contaminations, the soil and the degradation process can be rendered aerobic, by adding oxygen or nitrate. For the purpose of degradation of chlorine-containing contaminations, organic compounds such as methanol or compost extract can be added, so that, automatically, the soil and the degradation process become anaerobic.

Further, per area of contamination, i.e. type source (area 3) or type plume (area 5) a most suitable system 10, 110 can be chosen, i.e. with or without reversible pumping direction. With source contaminations (area 3), preferably, system 10 is chosen, as shown in Fig. 1, because owing to the reciprocating pumping movement, the source contamination 3 can be controlled well. Moreover, as a result thereof, the added decontaminants can be kept between the wells 11, 12 within the contaminated area and a proper mixing of the decontaminants and the contaminations can take place, which contributes to a good, complete and rapid degradation.

With the deeper located plume contaminations (area 5), preferably, the system 110 according to Fig. 2A,B is utilised. An advantage hereof is that with it, a relatively large groundwater flow rate can be circulated (because of the greater depth, there is little risk of soil subsidence) so that a relatively large contaminated area can be cleaned in efficient manner. The placing of the wells 111, 112 is then preferably chosen such that the extraction well 111, where contaminated groundwater is pumped upwards, is located in the plume near the source (area 3) and the infiltration well 112, with which groundwater injected with decontaminants is pumped back, is located at the end of the plume as shown in Fig. 2B. Hence, by pumping up the groundwater, a sort of 'safety net' is created, so that the contaminated area 5 can spread no further. Through the addition of the decontaminants via the dosing means 116, the area 5 will be gradually decontaminated, towards the contaminating source (area 3), as illustrated in Fig. 2 B, in which area 7 has already been decontaminated.

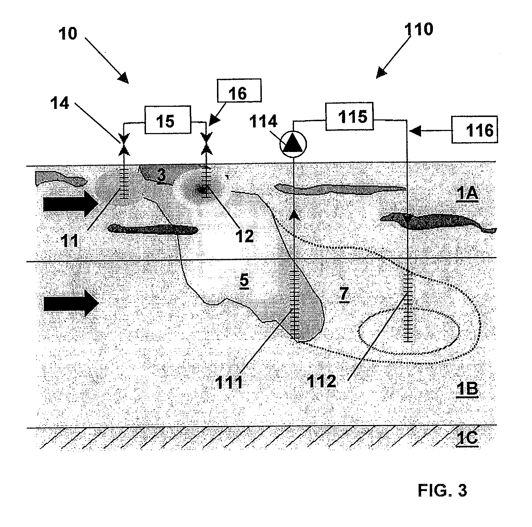

Figure 3 shows the situation in which the soil 1 has been contaminated with both type areas 3, 5, i.e. source and plume. In that case, both systems 10, 110 can be used next to each other, as shown in Fig. 3, while the operation remains the same as described with reference to Figs. 1 and 2. However, as, in this case, the source 3 and the contaminations 5 resulting therefrom are dealt with simultaneously, the efficiency of the decontamination can be increased and the time required thereto can be shortened. If desired, the systems 10 and 110 can then be connected, so that the heat and cold of these systems 10, 110 can be utilised for heating or, conversely, cooling a (group of) building (s.).

The decontaminants can be dispensed, for instance, via the dosing means 16, 116 in intermittent, fixed or continuous amounts, while the amount can be geared to the gravity and concentration of the contaminations and the magnitude of the circulated groundwater flow rate. Alternatively, the dosage can be regulated with regulating equipment provided to that end (not shown) based on concentrations of contaminations measured upstream.

The invention is not limited in any manner to the exemplary embodiments represented in the description and the drawing. All combinations of (parts of) embodiments described and/or shown are understood to fall within the inventive concept. Moreover, many variations thereon are possible within the framework of the invention as outlined by the claims.

For instance, per cooling/heating system more than two wells can be provided, between which groundwater can be circulated. It is also possible to connect the system to several buildings, houses or industrial plants, possibly even having opposite thermal requirements (for instance heating for a dwelling, cooling for industry). It is also possible to transport the exchanged cold or heat to a second above ground location at a distance from the contaminated location, via transport means suitable to that end, such as ducts. Further, the system can be expanded with buffers for temporary storage of groundwater in order to give this water the opportunity to come to a particular temperature before it is pumped back into the soil.

In addition to the above described decontaminants to be added to the groundwater, other sorts of decontaminating means can be deployed to promote degradation of the contaminations. For instance, the temperature of the contaminated soil area can be increased, at least locally, in order to stimulate growth of bacteria and hence accelerate the degradation process, provided that the heat/cold process is not unacceptably disturbed. Such a variant seems interesting in particular when residual heat is available coming from, for instance, a nearby location.

Alternatively, the decontaminants can be injected directly into the soil at strategic positions, whereupon these substances can be carried along and spread by the groundwater pumped therealong. Hence, contamination of above ground system parts by decontaminants can be avoided, at least limited. Further, a method according to the invention can be combined with all sorts of above ground or underground filtering techniques in order to free the groundwater of contaminants.

These and many variants are understood to fall within the framework of the invention as outlined by the following claims.

## Claims

1. A method for heating and/or cooling for instance a building or a fluid with geothermal energy, wherein groundwater is circulated between an underground location hereinafter to be called: well (11, 12; 111, 112) and an above ground location, while at the above ground location heat is given off to the groundwater or extracted from the groundwater, **characterized in that** during circulation, decontaminants are added to the groundwater and/or the soil surrounding this groundwater in order to decontaminate the groundwater and the surrounding soil, at least free it of contaminations.

2. A method according to claim 1, wherein the decontaminants comprise nutrients, such as nitrogen, phosphor or sulphate, for stimulating bacterial growth, which can degrade the contaminations.

3. A method according to claim 1 or 2, wherein the decontaminants comprise electron acceptors, such as for instance oxygen or nitrate, which stimulate aerobic, natural degradation of contaminations present in the groundwater and/or the surrounding soil.

4. A method according to claim 1 or 2, wherein the decontaminants comprise an organic substrate, such as, for instance, methanol or compost extract, which stimulates anaerobic degradation of contaminants present in the groundwater and/or the surrounding soil.

5. A. method according to any one of the preceding claims, wherein the groundwater is circulated between at least two wells (11, 12; 111, 112), which are located at a distance from each other.

6. A method according to claim 5, wherein the pumping direction and/or the exchange of thermal energy, i.e. giving off or taking up, is regularly reversed, for instance periodically or on the basis of a change in an above ground demand for heat or, conversely, cold.

7. A method according to any one of the preceding claims, wherein, inter alia, the number of wells (11, 12; 111, 112) their mutual position, the depth of the well, the pumping direction, the pump flow rate, the composition of the decontaminants and/or the concentration thereof added to the groundwater or the soil is geared to the type of contamination to be decontaminated.

8. A method according to any one of the preceding claims, wherein the wells (11, 12; 111, 112) are cleaned regularly, for instance by flushing them with water and/or an acid or by brushing them clean.

9. A geothermal cooling and/or heating system (10; 110), comprising pumping means (14; 114) for circulating groundwater between one or several underground locations (11, 12; 111, 112) and an above ground location, and heat exchanging means (15, 115) for extracting heat from or giving heat off to the groundwater at an above ground location, **characterized in that** further, dosing means (16, 116) are provided for adding to the groundwater and/or the soil surrounding this groundwater decontaminants whose composition is arranged for degrading contaminants present in this groundwater and/or this soil surrounding the groundwater or rendering them otherwise harmless.
